# EUROPEAN PATENT SPECIFICATION

(11) **EP 0 718 513 B1**
(45) Date of publication and mention of the grant of the patent: **10.03.1999**
(21) Application number: 93919632.5
(22) Date of filing: 08.09.1993
(51) Int. Cl.: F16C 33/62

(54) **MECHANICAL PART HAVING ROLLING ELEMENTS**
MECHANISCHES TEIL MIT ROLLELEMENTEN
PIECE MECANIQUE COMPORTANT DES ELEMENTS DE ROULEMENT

(43) Date of publication of application: 26.06.1996
(73) Proprietor: NTN CORPORATION, Osaka-shi Osaka 550-0003 (JP)
(72) Inventor: TSUSHIMA, Noriyuki, Mie 511 (JP); NAKASHIMA Hirokazu, Gifu 503-03 (JP)
(74) Representative: Sperling, Rüdiger, Dipl.-Ing.
(86) International application number: JP9301278
(87) International publication number: WO9507417

(56) References cited:
- GB-A- 2 097 735
- GB-A- 2 258 274
- JP-A- 2 125 841
- JP-A- 3 199 340
- JP-A- 4 194 415
- JP-A-50 022 726
- JP-A-57 178 902
- JP-A-62 218 542
- US-A- 3 216 869
- US-A- 4 992 111
- PATENT ABSTRACTS OF JAPAN vol. 011, no. 357 (C-458), 20 November 1987 & JP 62 127425 A (HONDA MOTOR CO LTD;OTHERS: 01), 9 June 1987,

## Description

### Field of the Invention

The present invention relates to a mechanical part having rolling contact elements, such as a constant velocity joint or a rolling contact bearing, whose fatigue life is improved by adoption of special types of steels and heat-treating methods in combination therewith.

### Background of the Invention

The outer ring of a constant velocity joint made of a steel, the outer ring of a bearing for a wheel, a type of rolling contact bearing, (these outer rings are hereinafter referred to as "outer members" in the following general descriptions), and the outer member of a ball screw have complicated shapes having thickwall sections and thin-wall sections. When these are subjected to carburizing or quench hardening, they are distorted in shape. In addition, when the screw section on the shaft of the outer member of a constant velocity joint and the mounting hole sections of the outer member of a bearing for a wheel are hardened, they are deteriorated in toughness. It is therefore necessary to leave them unhardened. For these reasons, in fabricating such a unit, middle carbon steels for structural use have been utilized, and induction hardening, which is most suited for local-hardening, has also been applied to the rolling or sliding surfaces of rolling or sliding elements to form case-hardened layers thereon (cf. introductory part of US-A-4 992 111). Furthermore, since the balls and rollers (hereinafter simply referred to as "rolling elements") used for the above-mentioned mechanical bearing or joint unit are simple in shape, they are made of a bearing steel, more specifically a high carbon chromium bearing steel (consisting of 1% carbon, 1.5% Cr, etc.) superior in hardenability and rolling fatigue life, and are subjected to quench hardening and tempering before use.

For the above-mentioned materials to be subjected to induction hardening, in addition to carbon steels for structural use which can be easily forged, a steel for structural use consisting essentially of 0.6 to 0.8% of carbon (weight %, hereinafter simply referred to as "%") and 0.5 to 1.0% of Si and Al in total has been developed and utilized (Unexamined Japanese Patent Publications JP-A-3 199 340, and JP-A-1 127 651). Since these types of steels are inexpensive and can be easily forged, they are suited for outer members having complicated shapes, they are less deformed during heat treatment at the time of local induction hardening, and they have tough cores. Furthermore, since their hardened layers obtained after induction hardening and tempering are superior in heat resistance and wear resistance, they have long rolling fatigue lives and thus have been used preferably for such outer members and inner rings (hereinafter referred to as "inner members"). In US-A-4 992 111 it is proposed to make a bearing race member from a steel comprising 0.60 to 0.85 % carbon by weight, 0.5 to 1 % by total weight of one or a combination of Si and Al, up to 1% Cr by weight and up to 0.5 % Mn by weight; and being subjected to quenching and tempering.

In addition, a bearing part made of the above-mentioned high carbon chromium bearing steel, carbonitrided on the surface thereof and then quench hardened and tempered has been proposed (US-A-3 216 869). Furthermore, a heat treatment method (Unexamined Japanese Patent Publication JP-A-62 218 542) is known whereby the amount of retained austenite in the core is reduced as less as possible by tempering at a relatively high temperature after hardening and an appropriate amount of austenite remains in the carburized surface layers to improve the rolling fatigue life of such a bearing or joint unit.

### Problems to be solved

When an induction hardened material consisting of a middle carbon steel was used for the race members of bearings and the outer members of constant velocity joints, the lives of these outer members were generally shorter than those of the rolling elements made of a quench hardened high carbon chromium bearing steel. However, as outer members, such as those described above, being made of induction hardened middle carbon steels and having longer lives, have been developed, and as the bearings and constant velocity joints for automobiles are requested to be made smaller and lighter, the contact stress applied to the rolling surfaces or the like is apt to increase. In these high contact stress operation conditions, the rolling fatigue lives of rolling elements made of a quench hardened high carbon chromium bearing steel have become unsatisfactory relative to those of the outer members.

This relative reduction in the fatigue lives of the rolling elements under high contact stress is caused owing to the spalling of the surfaces of the rolling elements, the spalling being induced by abrasion powder generated by the abrasion on the rolling surfaces or sliding surfaces of the hardened outer members made of induction hardened materials. The spalling of the surfaces of the rolling elements occurs frequently in the cases wherein both the sliding and rolling movements of the rolling elements are caused on the sliding surfaces between the rolling elements and the outer members of bearings or joint units, particularly, constant velocity joints.

When the quench hardened or carbonitrided parts made of the above-mentioned high carbon chromium bearing steel are used to prevent and reduce the abrasion of the outer members, it is difficult to forge them in complicated shapes. Great reliance must be placed on machining. This machining is unsuited for mass production and increases production costs, thereby being impractical.

Accordingly, it is an object of the present invention to provide a mechanical part having rolling contact elements superior in fatigue life, reliability and mass production capability to meet the needs for longer fatigue lives of the rolling surfaces of the outer members by extending the limits of the fatigue lives which depend on the spalling of the surfaces of the rolling elements.

### Disclosure of the Invention

The present invention relates to a mechanical part having rolling contact elements comprising an outer member whose inner surface is provided with a rolling surface, an inner member whose outer surface is provided with a rolling surface, and rolling elements rotatably interposed between the rolling surfaces of the outer and inner members, where in the outer member is made of a steel consisting essentially of at least 0.50 to 0.70% of carbon, 0.5 to 1.0% by total weight of one or a combination of Si and Al, up to 1.5 % Cr by weight and up to 1.5 % Mn by weight, the rolling surface of the outer member is provided with a hardened layer obtained by induction hardening, the rolling elements are made of a high carbon chromium bearing steel having been hardened and tempered, and the outer surfaces of the rolling elements are provided with carbonitrided surface layers.

These types of mechanical parts having rolling contact elements are constant velocity joints, bearings for wheels and ball screws. In addition to balls, cylindrical and tapered rollers are also used as rolling elements.

Since the outer member is made of a middle carbon steel for induction hardening, consisting essentially of 0.50 to 0.70% of carbon, and the rolling and sliding surfaces thereof are tempered after induction hardening, the unhardened core thereof is left nearly soft and superior in impact resistance. On the other hand, since compressive stress caused by transformation during induction hardening remains at the hardened surface layers such as the layers for the rolling surfaces, the hardened layers are superior in wear resistance and prevent the progress of surface spalling caused by cracks at the surface layers, thereby extending the rolling fatigue life of such a mechanical bearing or joint unit.

If the content of carbon in this steel for induction hardening is less than 0.50%, the material has insufficient induction hardening capability. On the other hand, if the content is more than 0.70%, the material becomes inferior in hot workability. The content of carbon should therefore be in the range of 0.50 to 0.70%, and more preferably be in the range of 0.60 to 0.70%.

Since this steel for induction hardening contains 0.5 to 1.0% by total weight of one or a combination of Si and Al, the temper softening resistance of the steel is enhanced by Al and/or Si, and the hardened layers are less softened even when the rolling surfaces are heated under high contact stress operation conditions. The hardened layers can thus have superior heat resistance. Furthermore, even when the steel is tempered at temperatures in the range of 180 to 260°C, higher than a normal tempering temperature of 170°C, the hardness of the case-hardened layers is hardly reduced and the retained austenite in the steel can be adjusted to an appropriate amount of 15% or less by volume, thereby ensuring substantial hardness and toughness of the hardened layers.

If the total content of Si and Al is less than 0.5%, the steel exhibits insufficient temper softening resistance and heat resistance. If the content is more than 1.0%, the steel exhibits insufficient hot workability. The total content of Si and Al should therefore be in the range of 0.5 to 1.0%. Usually, an Al killed steel containing 0.70 to 0.90% of Si and 0.03% of Al is used for the steel mentioned above.

The contents of two other ingredients, Mn and Cr, should be 1.5% or less for each. However, since Mn ensures the toughness of the core and enhances the hardenability of the layers case-hardened by induction hardening, the content of Mn should be adjusted in the range of 1.0 to 1.2%. Cr is not added and the content of Cr is thus usually 0.3% or less.

On the other hand, the high carbon chromium bearing steel of the rolling element is a steel consisting essentially of 0.90 to 1.10% of carbon, 0.15 to 0.70% of Si, 1.0% or less of Mn and 1.0 to 1.6% of Cr. When this steel is carbonitrided, the Ms point of the carbon/nitrogen concentrated layer in the surface layer of the rolling element is lowered, so that martensite transformation at the carbonitrided surface layer is made slower than that at the core in the hardening process after austenitizing. As a result, residual compressive stress is generated in the surface layer after the transformation, the amount of retained austenite increases, fine carbonitrides are dispersed and precipitated in the matrix of the surface layer, thereby increasing the hardness, wear resistance and fatigue resistance of the rolling element.

Even when abrasion powder generated owing to the abrasion on the rolling surface of the outer or inner member enters inside, the carbonitrided rolling element retards the spalling of the surface of the rolling element and extends the life thereof. As a result, the entire rolling contact bearing or the entire constant velocity joint has a longer life, thereby enhancing the reliability thereof.

As a high carbon chromium bearing steel, JIS SUJ2 steel (refer to Table 4; equivalent to DIN 100Cr6 steel and SAE 52100 steel) is used preferably. When carbonitriding this high carbon chromium bearing steel by using a gas carbonitriding method, rolling elements are kept heated generally in the atmosphere of an endothermic gas (composed of about 20% of CO, about 35% of H₂ and about 40% of N₂; hereinafter referred to as "RX gas") added with a hydrocarbon gas such as methane to raise a carbon potential and also added with ammonia as a nitriding agent. Instead of the RX gas, a nitrogen-based exothermic gas (nonoxidative exothermic gas composed of about 2% or less of CO, about 2% or less of H₂ and the remainder being almost N₂; hereinafter referred to as "NX gas") and a nitrogen gas can also be used.

When the surface layer of the rolling element is carbonitrided in a mixed gas, that is, a gas composed of a nitrogen gas or the above-mentioned NX gas mixed with a hydrocarbon gas and an ammonia gas, the surface layer is highly nitrided and significantly hardened by hardening, thereby having enhanced wear resistance and fatigue resistance. Unlike the atmosphere of a mixed gas composed of the conventional RX gas and an ammonia gas (nitriding agent), which includes a large amount of hydrogen gas, the NX gas based atmosphere can contain a less amount of hydrogen gas. This is beneficial in that the fear of hydrogen embrittlement decreases during the use of the rolling element.

In the present invention, the steel for the inner member, generally having a simple cylindrical shape, can be selected from three different steels: a carburized low carbon chromium steel for structural use (0.13 to 0.48% of carbon, 0.90 to 1.20% of Cr; for example, JIS SCr415 steel listed in Table 4, or the like), an induction hardened middle carbon steel for structural use (0.47 to 0.61% of carbon; for example, JIS S53C steel listed in Table 4) and a quench hardened high carbon chromium bearing steel mentioned above (for example, JIS SUJ2 steel listed in Table 4, or the like).

Since the outer member of the mechanical bearing or joint unit of the present invention is made of a middle carbon steel for hardening and is superior in formability as described above, it can be formed in a complicated shape. Furthermore, since the inner surface (including the rolling and sliding surfaces) of the outer member is formed as an induction hardened layer of the middle carbon steel, the inner surface is slightly inferior in wear resistance but superior in spalling resistance to the surfaces of the rolling elements when the rolling elements roll and slide on the inner surface. On the other hand, since the rolling element is made of a high carbon chromium steel and the outer circumferential surface thereof has a surface layer hardened by carbonitriding, the rolling element is superior in wear resistance and rolling fatigue resistance to a quench hardened element. As a result, the above-mentioned joint unit or bearing has a longer fatigue life as a whole.

The outer member can be easily machined, formed and heat-treated by induction heating even when it has a complicated shape. In addition, since the rolling element, which is simple in shape, is suited for carbonitriding, and the bearing or joint unit can be made lighter by using a selected material suited for the inner member. For these reasons, the bearing or joint unit of the present invention is suited for mass production without increasing processing and heat treatment costs.

### Brief Description of the Drawings

Fig. 1 (A) and Fig. 1 (B) are vertical sectional views of a bearing for a wheel and a fixed type ball joint, respectively, used for automobiles, according to the present invention.

Fig. 2 shows Vickers hardness distributions of the surface layers at the cross sections of steel balls which have been carbonitrided and tempered.

Fig. 3 (A) and Fig. 3 (B) are microscopic photos taken at the cross sections near the surfaces of steel balls which have been carbonitrided and then tempered. (Magnification: 400, corrosive liquid: picric acid alcoholic solution)

Fig. 4 shows Vickers hardness distributions of the surface layers at the cross sections of steel balls which have been carbonitrided and tempered at a low temperature, then tempered at a high temperature of 500°C for 1 hour.

### Best Mode Embodied by the Invention

First, the details of the present invention will be described below referring to the accompanying drawings.

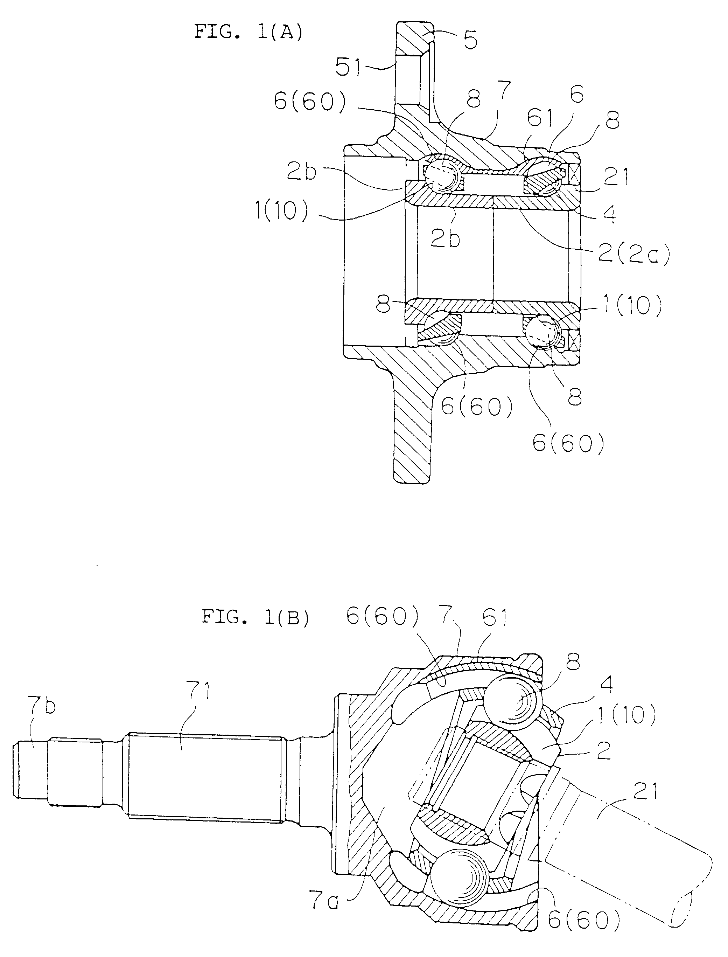

Fig. 1 (A) is a vertical sectional view of a bearing for a wheel used to support wheels of automobiles, which is taken as an example. The structure of the bearing has already been known. A flange 5 is integrated with the outside of an outer ring 7 which is used as an outer member. The flange 5 is provided with bolt holes 51 through which mounting bolts (not shown) are inserted to secure the flange 5 to an automobile wheel. At the front and back positions on the circumference of the inner surface of the outer ring 7, two race ways 60 having rolling surfaces 6 are provided, in which two rows of balls 8 used as rolling elements are disposed at the front and back positions.

An inner ring 2 used as an inner member comprises a pair of inner rings 2a, 2b disposed back and forth in the axial direction thereof and each having a rolling surface 1 at an end thereof adjacent to a diameter expansion section 21, on which the above-mentioned balls 8 roll. The inner rings are disposed inside the hollow section of the outer ring 7 with the other end surfaces of the inner rings abutting each other, and the rolling surfaces 1 slidably contact the balls 8 and are rotatably supported in the outer ring 7.

In this structure, according to the present invention, the outer ring 7 is integrally formed together with the flange 5 thereof by hot forging by using a middle carbon steel consisting essentially of 0.50 to 0.70% of carbon added with Al and/or Si. A hardened layer 61 is formed by induction hardening and tempering only at the rolling surfaces 6 of the grooves 60 and their peripheral sections.

On the other hand, since the inner ring 2 has a relatively cylindrical shape, it is made of JIS SUJ2 steel (a high carbon chromium bearing steel) having been quench hardened, and then tempered.

The balls 8 are made of SUJ2 steel having been carbonitrided, quench hardened and then tempered. As a result, hard carbonitrided layers (not shown) are formed on the surfaces of the balls 8.

Fig. 1 (B) shows an example of a fixed type ball joint which is a type of constant velocity joint and another subject of the present invention. In an outer ring 7 used as an outer member, several stripes of rolling grooves 60 having rolling surfaces 6 on the inner circumferential surface of a mouth 7a are disposed along the axial direction of the outer ring 7. A serration 71 is formed by thread-rolling on the outer circumference of the stem 7b of a shaft integrally projected from the end of the mouth 7a. The outer ring 7 is integrally formed by hot forging by using the above-mentioned middle carbon steel consisting essentially of 0.50 to 0.70% of carbon added with Al and/or Si. Hardened layers 61 which have been induction hardened and then tempered are formed on the inner circumferential surface of the mouth 7a and the rolling surfaces 6 thereof.

In the mouth 7a of the outer ring 7, an inner ring 2 used as an inner member is supported via balls 8 which are used as rolling elements and fit in rolling grooves 10. This inner ring 2 is made of SCr415 steel which has been carburized, hardened and then tempered, and at least the rolling surfaces 1 inside the rolling grooves are hardened. The balls 8 are made of SUJ2 steel which has been gas carbonitrided, hardened and then tempered.

In addition, a ball screw (not shown) which is still another subject of the present invention is a mechanical bearing wherein a screw shaft used as an inner member functions together with a nut used as an outer member via balls used as rolling elements. In the present invention, the nut is made of the above-mentioned steel consisting essentially of 0.50 to 0.70% of carbon added with Al and/or Si and formed by hot forging, and the ball rolling surfaces thereof are induction hardened. The balls are made of SUJ2 steel which has been gas carbonitrided, hardened and then tempered. The screw shaft of the ball screw is made of SUJ2 steel having been quench hardened or a low chromium steel for structural use having been carburized.

Next, rolling fatigue life tests are described below, which were conducted for three samples made of different steels for induction hardening.

For a sample, a middle carbon steel added with Si (consisting essentially of 0.65% of carbon, 0.80% of Si, 1.10% of Mn, 0.015% of P, 0.010% of S, 0.030% of Al and 0.20% of Cr; hereinafter referred to as "NKJ65 steel") was used. This sample was machined by a lathe into a cylindrical shape with an allowance for precise grinding. The outer circumferential surface thereof was induction hardened and tempered at 170°C for 2 hours in accordance with a conventional method. The sample was then finished into a cylindrical test piece of 12 mm in diameter and 22 mm in length.

As comparison examples, a sample made of JIS S53C steel (middle carbon steel for structural use) and a sample made of SUJ2 steel (high carbon chromium bearing steel) were selected and machined by a lathe into cylindrical pieces. The S53C steel was induction hardened and then tempered at 170°C for 2 hours. The SUJ2 steel was austenitized at 850°C for 0.5 hours and quickly cooled in oil (quench hardened), then tempered at 180°C for 2 hours. Both the samples were also finished into similar cylindrical test pieces.

Next, by using a cylindrical rolling element fatigue life tester (made by NTN Co., Ltd., the applicant of the present invention), the cylindrical test pieces were subjected to life tests at a rotation speed of 23,120 rpm under a load amounting to Hertz maximum contact stress of 600 kgf/mm². The results of the tests are shown in Table 1.

**Table 1**

| Cylindrical rolling element fatigue life tests | | |
|---|---|---|
| Steel | Heat treatment | 10% life |
| S53C | Induction hardening | 2000 - 3800 x 10⁴ |
| NKJ65 | Induction hardening | 8200 x 10⁴ |
| SUJ2 | Quench hardening | 7000 x 10⁴ |

According to the results shown in Table 1, it is found that the induction hardened test piece made of NKJ65 steel is superior in fatigue life to the quench hardened test piece made of SUJ2 steel. On the other hand, the test piece made of S53C steel is far more inferior in life to the test piece made of NKJ65 steel and the test piece made of SUJ2 steel.

Next, assuming a bearing for a wheel mentioned before as an example of the present invention, ball bearings conforming to JIS Bearing No. 6206 (62 mm in outer ring diameter and 30 mm in inner ring diameter) were formed by using induction hardened samples made of middle carbon steels (S53C and NKJ65 having the above-mentioned composition) as outer rings, by using hardened and tempered samples made of a high carbon chromium bearing steel (SUJ2 steel) as inner rings, and by using carbonitrided balls made of a high carbon chromium bearing steel (SUJ2 steel) as rolling elements. These bearings were then subjected to rolling fatigue tests.

To carbonitride the balls, they were heated by a bright quenching furnace in an atmosphere composed of 100 parts of RX gas for bright quenching, one part of propane gas and 10 parts of ammonia gas by volume at 850°C for 1.5 hours, and then quenched in oil. The balls were then tempered at 170°C for 2 hours.

As a comparison example, a bearing, comprising an outer ring made of a quench hardened high carbon chromium steel (SUJ2) and balls also made of a quench hardened SUJ2 steel, was subjected to the life test. After austenitizing at 850°C for 0.5 hours, the bearing was quenched in oil and tempered at 160°C for 2 hours. The results are shown in Table 2.

The life tests were conducted by using the 6206 type bearings, at a bearing load of 700 kgf, at a rotation speed of 2000 rpm and in the circular lubrication conditions using turbine oil VG56.

According to Table 2, in the bearings broken during the life tests, it is found that ball spalling occurs less frequently in the combination of an outer ring made of a middle carbon steel and carbonitrided balls made of a high carbon chromium steel, such as the example of the present invention, than in the conventional combination of an outer ring made of a middle carbon steel and quench hardened balls made of a high carbon chromium steel. It is also found that the spalling frequency of the former is similar to that of the combination of an outer ring and balls, both of which were quench hardened, and that the life of the former is longer than the latter.

**Table 2**

| Results of the bearing rolling life tests ¹⁾ | | | | | | |
|---|---|---|---|---|---|---|
| Test No. | Outer ring | | Ball | | Ball spalling frequency (%) | Life (h) |
| | Steel | Heat treatment | Steel | Heat treatment | | |
| 1 | S53C | Induction hardening | SUJ2 | Quench hardening | 40 | 210 |
| 2 | S53C | Induction hardening | SUJ2 | Carbonitriding | 5 | 280 |
| 3 | NKJ65 | Induction hardening | SUJ2 | Quench hardening | 60 | 300 |
| 4* | NKJ65 | Induction hardening | SUJ2 | Carbonitriding | 10 | 650 |
| 5 | SUJ2 | Quench hardening | SUJ2 | Quench hardening | 10 | 600 |

| | | | | | | |
|---|---|---|---|---|---|---|
| 1) Inner ring: quench hardened SUJ2 Bearing type number: JIS 6206 (outer diameter: 62 mm, inner diameter: 30 mm) Load condition: 7000 kgf, rotation speed: 2000 rpm | | | | | | |
| 2) * The example of the present invention | | | | | | |

Furthermore, an example of a fixed type ball joint mentioned before, comprising an induction hardened outer ring made of a middle carbon steel and carbonitrided balls made of a high carbon chromium steel (SUJ2) as rolling elements, is described below.

The rolling elements thereof are balls of 16.669 mm in diameter. By using a bright quenching furnace and by selecting the RX gas or NX gas as a carrier gas, in an atmosphere composed of 100 parts of the carrier gas, one part of butane gas used as a carburizing agent and 10 parts of ammonia gas used as a nitriding agent by volume at room temperature and normal pressure, the balls were carbonitrided at 850°C for 2 hours. After quenched in oil, the balls were tempered at 170°C for 2 hours.

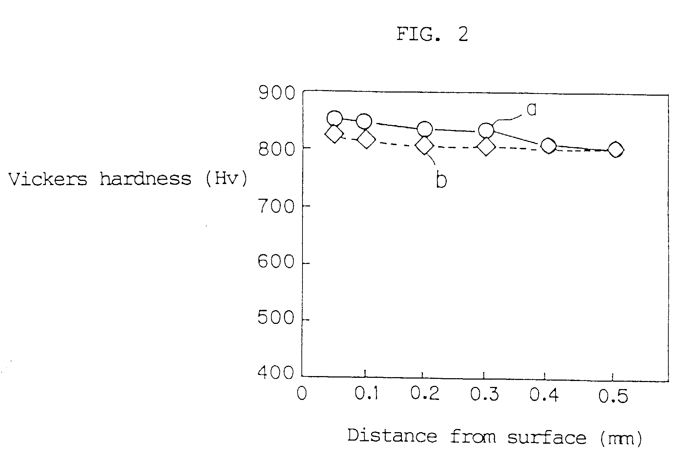

Fig. 2 shows hardness distribution curves measured by using a Micro-Vickers hardness tester in the range of the surfaces to the cores at the cross sections of two types of balls which were carbonitrided and then tempered. Although the surface layer becomes slightly harder than the core when carbonitrided, the ball heat-treated in an atmosphere based on the NX gas (represented by curve a in the figure) is harder at the surface layer than the ball heat-treated in an atmosphere based on the RX gas (represented by curve b in the figure), that is, the hardness of the former is higher than the latter by HRC 1 to 2 when the hardness is converted into Rockwell C hardness.

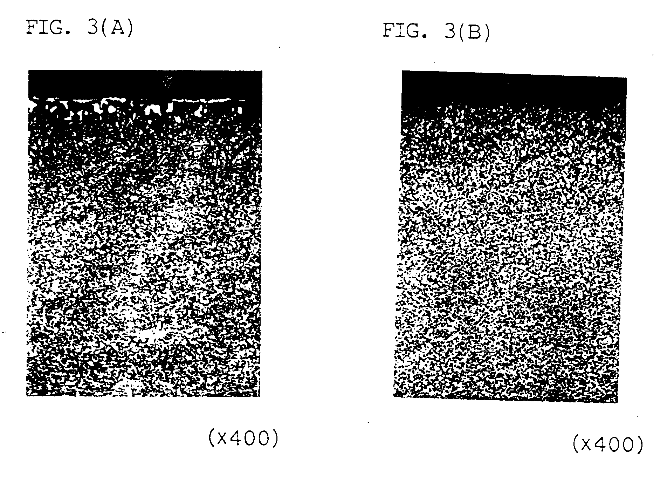

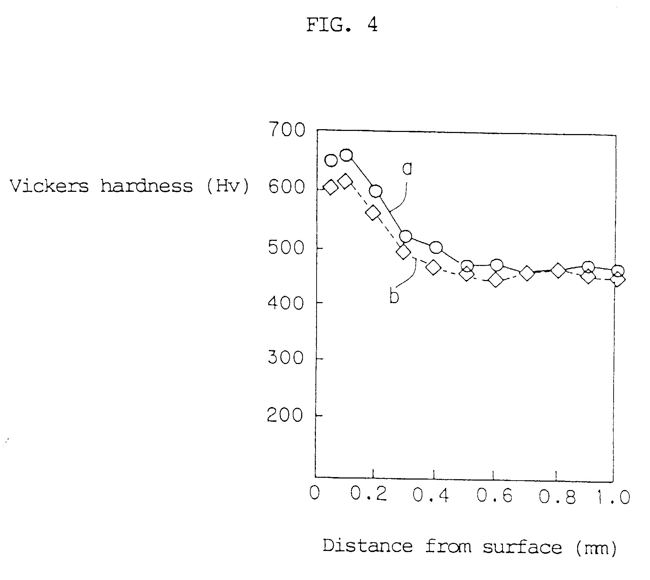

Fig. 3 (A) and Fig. 3 (B) are microscopic photos taken near the surfaces at the cross sections of the two types of heat-treated steel balls. Fine carbides are observed in the surface layer of the steel ball carbonitrided in the atmosphere based on the NX gas (according to Fig. 3 (A)). It is assumed that these fine carbides contribute to improve wear resistance. Fig. 4 shows the hardness distributions of two types of steel balls which were tempered at a low temperature in the manner similar to that applied to the two types of steel balls shown in Fig. 2 and then further tempered at a high temperature of 500°C for 1 hour. Although the core is softened to a hardness of Hv 500 or less by the tempering at the high temperature, the surface layer still has a hardness of Hv 600 or more. This indicates that the surface layer is difficult to be softened even if the rolling surface is heated by friction during use. The hardness of this surface layer is provided by the precipitation and dispersion of carbonitrides wherein nitrogen has been penetrated from the surface during the carbonitriding process. Furthermore, in Fig. 4, the hardness of the hardened layer on the surface of the steel ball carbonitrided in the atmosphere based on the NX gas (curve a in the figure) is higher than that of the steel ball carbonitrided in the atmosphere based on the RX gas (curve b in the figure). It is assumed that this difference in hardness is caused by the difference in the amount of nitrogen in the surface layer.

Next, fixed type ball joints were subjected to life tests. The fixed ball joints are categorized as a type shown in Fig. 1 (B). Two types of outer rings were used: a forged sample made of S53C steel and a forged sample made of the above-mentioned NKJ65 steel. The inner circumferential surfaces at the mouths of the two types of outer rings were induction hardened. The inner rings thereof were carburized samples made of SCr415 steel and similar to the conventional inner rings.

The balls used as the rolling elements were carbonitrided samples made of SUJ2 steel. As described before regarding the above-mentioned example, in the atmospheric gas in the furnace used for carbonitriding, either the RX gas or NX gas was used as a carrier gas. Each gas was formed by mixing a propane gas and an ammonia gas. The heat treatment conditions were the same as those for the above-mentioned example. The comparison examples were ball joints made by using quench hardened balls made of the conventional SUJ2 steel.

The life tests of fixed type ball joints were conducted at an activation angle of 6°, a load torque of 21 kgf-m and a rotation speed of 1700 rpm.

The test results are shown in Table 3. When induction hardened samples are used as the outer rings in the same way, the carbonitrided balls are more effective than the conventional quench hardened balls in extending the lives of the joints. Furthermore, the carbonitrided samples heat-treated in the atmosphere based on the NX gas is found to be superior in extending the rolling fatigue lives to those samples heat-treated in the atmosphere based on the RX gas.

**Table 3**

| Results of the constant velocity ball joint life tests ¹⁾ | | | | | |
|---|---|---|---|---|---|
| Test No. | Outer ring | | Ball | | 10% life (h) |
| | Steel | Heat treatment | Steel | Heat treatment | |
| A | S53C | Induction hardening | SUJ2 | Quench hardening | 68 |
| B | S53C | Induction hardening | SUJ2 | RX gas based carbonitriding | 120 |
| C | NKJ65 | Induction hardening | SUJ2 | Quench hardening | 138 |
| D* | NKJ65 | Induction hardening | SUJ2 | RX gas based carbonitriding | 225 |
| E* | NKJ65 | Induction hardening | SUJ2 | NX gas based carbonitriding | 300 |

| | | | | | |
|---|---|---|---|---|---|
| 1) Inner ring: carburized SCr415 steel Load torque: 21 kgf-m, rotation speed: 1700 rpm, activation angle: 6^{o} | | | | | |
| 2) * Example of the present invention | | | | | |

A mixed gas based on the NX gas was used as a carbonitriding gas in the example of the present invention. However, instead of the mixed gas, a mixed gas composed of a nitrogen gas, a hydrocarbon gas and an ammonia gas can also be used.

**Table 4**

| Steels specified in JIS and their chemical compositions (%) | | | | | | |
|---|---|---|---|---|---|---|
| Steel | C | Si | Mn | P | S | Cr |
| SCr415 | 0.13 - 0.18 | 0.15 - 0.35 | 0.60 - 0.85 | ≦ 0.030 | ≦ 0.030 | 0.90 - 1.20 |
| S53C | 0.50 - 0.56 | 0.15 - 0.35 | 0.60 - 0.90 | ≦ 0.030 | ≦ 0.035 | - |
| SUJ2 | 0.95 - 1.10 | 0.15 - 0.35 | ≦ 0.50 | ≦ 0.025 | ≦ 0.025 | 1.30 - 1.60 |

### Industrial Applicability

The mechanical bearing or joint unit of the present invention having rolling elements is suited for such a mechanical bearing or joint unit comprising an outer member having a complicated shape, particularly, a constant velocity joint for a rotation drive power transmission system, a bearing for a wheel used to rotatably support an automobile wheel, and a ball screw for machine control in the automobile and other mechanical industries.

## Claims

1. A mechanical part having rolling contact elements comprising:
an outer member whose inner surface is provided with a rolling surface;
an inner member whose outer surface is provided with a rolling surface; and
rolling elements rotatably interposed between the rolling surfaces of said outer and inner members; wherein
the outer member is made of a steel consisting essentially of at least 0.50 to 0.70% of carbon by weight, 0.5 to 1.0% by total weight of one or a combination of Si and Al, up to 1.5 % Cr by weight and up to 1.5 % Mn by weight, said rolling surface of the outer member is provided with a hardened layer obtained by induction hardening, the rolling elements are made of a high carbon chromium bearing steel having been hardened and tempered, and the outer circumferential surfaces of the rolling elements are provided with carbonitrided surface layers.

2. A mechanical part having rolling contact elements according to claim 1, wherein said mechanical part is a fixed type ball joint.

3. A mechanical part having rolling contact elements according to claim 1, wherein said mechanical part is a bearing for a wheel.

4. A mechanical part having rolling contact elements according to claim 1, wherein said surface layer of the rolling element is a surface layer hardened by carbonitriding in a mixed gas composed of a nitrogen gas or an exothermic nitrogen-based gas, a hydrocarbon gas, and an ammonia gas.

## Patentansprüche

1. Mechanikteil mit Wälzkontaktelementen mit
- einem äußeren Teil, dessen innere Oberfläche mit einer Wälzfläche versehen ist,
- einem inneren Teil, dessen äußere Oberfläche mit einer Wälzfläche versehen ist und
- Wälzelementen, die zwischen den Wälzflächen des äußeren und inneren Teils drehbar angeordnet sind,
- wobei das äußere Teil aus Stahl hergestellt ist, der im wesentlichen aus mindestens 0,50 bis 0,70 Gewichtsprozenten Kohlenstoff, insgesamt 0,5 bis 1,0 Gewichtsprozenten von Si und Al oder einer Kombination von beiden, bis zu 1,5 Gewichtsprozenten Cr und bis zu 1,5 Gewichtsprozenten Mn besteht,
- wobei die Wälzfläche des äußeren Teils eine durch induktives Härten erhaltene gehartete Schicht ist und
- die Wälzelemente aus gehärtetem und getemperten Chromlagerstahl mit hohem Kohlenstoffgehalt hergestellt sind und
- die äußeren Umfangsflächen der Wälzelemente mit karbonitrierten Oberflächenschichten versehen sind.

2. Mechanikteil mit Wälzkontaktelementen nach Anspruch 1, wobei das Mechanikteil eine festgelagerte Kugellagerverbindung ist.

3. Mechanikteil mit Wälzkontaktelementen nach Anspruch 1, wobei das Mechanikteil ein Lager für ein Rad ist.

4. Mechanikteil mit Wälzkontaktelementen nach Anspruch 1, wobei die Oberflächenschicht des Wälzelements eine Oberflächenschicht ist, die durch Karbonitrierung in einem aus Stickstoffgas oder einem. exothermen Gas auf Stickstoffbasis, Kohlenwasserstoffgas und Ammoniakgas bestehenden Gasgemisch gehärtet wurde.

## Revendications

1. Pièce mécanique comportant des éléments de contact roulants, comprenant :
un élément extérieur, dont la surface intérieure est pourvue d'une surface de roulement;
un élément intérieur, dont la surface extérieure est pourvue d'une surface de roulement, et
des éléments roulants intercalés, de manière à pouvoir tourner, entre les surfaces de roulement desdits éléments extérieur et intérieur;
dans laquelle l'élément extérieur est formé d'un acier constitué essentiellement par au moins 0,50 à 0,70 % en poids de carbone, 0,5 à 1,0 % au total en poids de l'un ou d'une combinaison de Si et Al, jusqu'à 1,5 % en poids de Cr et jusqu'à 1,5 % en poids de Mn, ladite surface de roulement de l'élément extérieur étant pourvue d'une couche trempée obtenue par trempe par induction, les éléments roulants sont formés d'un acier pour palier au carbone et au chrome, qui a été soumis à une trempe et à un revenu, et les surfaces circonférentielles extérieures des éléments roulants sont pourvues de couches superficielles carbonitrurées.

2. Pièce mécanique comportant des éléments de contact roulants selon la revendication 1, dans laquelle ladite pièce mécanique est un joint rotule de type fixe

3. Pièce mécanique comportant des éléments de contact roulants selon la revendication 1, dans laquelle ladite pièce mécanique est un palier pour une roue.

4. Pièce mécanique comportant des éléments de contact roulants selon la revendication 1, dans laquelle ladite couche superficielle de l'élément roulant est une couche superficielle trempée par carbonitruration dans un mélange gazeux composé d'un gaz azote ou d'un gaz exothermique à base d'azote, un gaz d'hydrocarbure et d'un gaz ammoniac.
